Europäisches Patentamt

**European Patent Office**

**Office européen des brevets**

(11) Numéro de publication: **0 229 565 B1**

## FASCICULE DE BREVET EUROPEEN

(45) Date de publication de fascicule du brevet: **04.03.92**   (51) Int. Cl.⁵: **A23C 19/05**

(21) Numéro de dépôt: **86402828.7**

(22) Date de dépôt: **16.12.86**

(54) **Procédé de fabrication de fromages à pâte pressée cuite.**

(30) Priorité: **17.12.85 FR 8518686**

(43) Date de publication de la demande:
**22.07.87 Bulletin 87/30**

(45) Mention de la délivrance du brevet:
**04.03.92 Bulletin 92/10**

(84) Etats contractants désignés:
**AT BE CH DE ES FR GB GR IT LI NL SE**

(56) Documents cités:
**US-A- 2 982 654**
**US-A- 3 886 288**

**JOURNAL OF DAIRY SCIENCE, vol. 64, no. 3, mars 1981, pages 523-525, Champaign, Illinois, US; C.L. HICKS et al.: "Equipment and procedure for manufacturing laboratory cheese curd"**

**JOURNAL OF DAIRY RESEARCH, vol. 22, 1955, pages 365-373; L.A. MABBITT et al.: "Experiments in cheesemaking without starter"**

(73) Titulaire: **Roquette Frères**

**F-62136 Lestrem(FR)**

(72) Inventeur: **Bussiere, Guy**
**9, rue Clément Ader**
**F-31520 Ramonville(FR)**
Inventeur: **Lablee, Jean**
**13 grande Rue**
**F-25660 Mamirolle(FR)**

(74) Mandataire: **Koch, Gustave et al**
**Cabinet PLASSERAUD 84, rue d'Amsterdam**
**F-75009 Paris(FR)**

Rank Xerox (UK) Business Services

## Description

L'invention a pour objet un nouveau procédé de fabrication de fromages à pâte pressée cuite.

Plus précisément, l'invention a pour objet un nouveau procédé de fabrication de fromages à pâte pressée cuite, selon lequel l'acidification du lait avant l'emprésurage est effectuée de façon contrôlée au moyen d'un agent acidogène.

Dans le cadre de l'invention, on entend par fromages à pâte pressée cuite, conformément à la classification donnée dans l'ouvrage "Le Fromage", coordonné par André ECK, Technique et Documentation (Lavoisier), Paris (1984), notamment pages 222-223, en particulier ceux dont le procédé de fabrication comporte, outre une phase de pressage, une phase de cuisson du mélange caillé-sérum jusqu'à une température généralement comprise entre 45 et 55°C et dont l'extrait sec est compris généralement entre 60 et 70%, tels les fromages de type gruyère, emmental, comté, Beaufort, grana comme le parmesan.

Il est rappelé que, de manière traditionnelle, la fabrication des fromages à pâte pressée cuite comprend essentiellement les étapes suivantes :

### Préparation du lait

Cette expression sous-entend les opérations :
- de traitement thermique éventuel du lait cru : généralement effectué dans la fabrication des fromages de type emmental alors que l'on met en oeuvre du lait cru dans le cas par exemple de certains fromages à appellation d'origine tels que les fromages de types comté et Beaufort,
- de maturation éventuelle par action de ferments lactiques qui réalisent une acidification du lait jusqu'à une valeur de pH correspondant aux exigences requises pour l'étape ultérieure d'emprésurage, généralement comprise entre 6,70 et 6,40.

Il est à noter que cette maturation qui n'était pas nécessaire autrefois, est beaucoup plus usitée de nos jours, car les méthodes modernes de collecte du lait ont conduit à une élévation du pH du lait mesuré au moment de sa réception à l'usine. En particulier, le lait d'hiver se révèle être généralement moins acide, d'où nécessité d'une correction de pH par maturation.

### Emprésurage

Le lait maturé est additionné d'enzymes coagulantes.

### Coagulation

D'une façon générale, on peut dire que les fromages à pâte pressée cuite nécessitent une coagulation du type "présure". Il n'empêche que même si l'acidification est d'un niveau relativement modeste, elle n'en a pas moins une grande importance quant à son incidence sur les étapes ultérieures de la fabrication et sur les caractéristiques du fromage terminé.

### Découpage-décaillage

Cette opération correspond à une division progressive du coagulum, passant d'un premier stade de découpage du caillé en morceaux de 50 cm³ environ jusqu'à obtention de la taille finale désirée (grains de caillé de quelques mm de diamètre), ce en jouant sur la forme et la vitesse des tranche-caillés.

Dans la pratique, les deux phases sont le plus souvent nettement distinctes, séparées par un temps de repos ou de légère agitation.

### Chauffage (ou cuisson)

Il est effectué de façon indirecte, par apport de vapeur ou d'eau chaude par exemple dans la double enveloppe, le mélange caillé-sérum en agitation étant porté graduellement jusqu'à la température désirée, voisine de 50°C, selon le type de fromage.

### Brassage

Cette action mécanique accentue la sortie du sérum des grains de caillé.

Moulage

Pressage

Cette phase permet la mise en forme et l'obtention de la cohésion du fromage, tout en achevant l'extraction du sérum.

Démoulage

Affinage

Il comprend classiquement trois phases successives de mise en cave froide, puis en cave chaude, puis de nouveau en cave froide, les temps et température relatifs à ces différentes phases étant fonction du type de fromage fabriqué.

En tout étant de cause, dans la fabrication des différents types de fromages à pâte pressée cuite, la phase de préparation du lait présente une importance primordiale; l'invention vise à améliorer cette phase.

Le lait utilisé en fabrication de fromages à pâte pressée cuite nécessite une phase de maturation à l'usine, compte tenu des conditions de collecte du lait ainsi qu'en raision d'une recherche d'une matière première de plus en plus constante en vue d'une meilleure maîtrise de la fabrication.

Afin d'amener le lait au pH requis pour l'emprésurage, il a été fait appel à une maturation basée sur un apport de ferments lactiques mésophiles. Il est bien entendu que cet apport est à distinguer de celui en flore lactique thermophile classiquement employé dans la fabrication des fromages à pâte pressée cuite, cette flore ayant un effet, acidifiant entre autres, non pas à l'emprésurage mais surtout lors des phases ultérieures en vue d'une bonne conduite de l'affinage.

Dans le cas du lait cru, la maturation peut être assurée par la seule action de la flore lactique sauvage, présente dans le lait. Les inconvénients sont alors liés au fait que le lait doit être maintenu à une température relativement élevée en vue de l'activation de cette flore, et surtout liés au fait que les temps de maturation sont très variables puisque la flore présente est elle-même très fluctuante d'un jour à l'autre. Elle peut être aussi assurée par un apport d'une préparation de flore lactique mésophile. Les inconvénients sont réduits mais non éliminés. Cet apport doit être d'un niveau très faible, compte tenu du faible niveau d'acidification recherché ; en conséquence la variabilité liée à la flore sauvage n'est que faiblement tamponnée.

Un apport à une concentration plus élevée tamponnerait plus valablement les variations de la flore sauvage, mais la chute de pH serait alors trop rapide, compte tenu du haut degré de précision recherché quant au pH à l'emprésurage et aussi compte tenu du fait que le pH continuerait d'évoluer jusqu'à la destruction de la flore lactique mésophile en cours de cuisson, ce qui aurait des conséquences néfastes lors des étapes ultérieures.

Dans le cas du lait traité thermiquement, les inconvénients notés ci-dessus sont moins marqués mais sont néanmoins toujours présents.

En conséquence, il apparaît clairement qu'une correction de pH si limitée, si précise, et si variable en fonction des lots de lait, s'avère très délicate et très lourde à réaliser par l'emploi d'une technique de fermentation basée sur les ferments lactiques, d'autant que la maîtrise de la fermentation lactique mésophile requise pour cette maturation ne peut être assurée par un traitement thermique en fin de maturation qui, en tout état de cause, pour ne pas altérer l'aptitude du lait à la fabrication de fromages à pâte pressée cuite, devrait être limité à une température de 65°C, pour un temps de 40 secondes, ce qui est insuffisant pour assurer une destruction quasi totale de la flore lactique.

Or, il est bien connu de l'homme du métier que le pH à l'emprésurage est capital vis-à-vis :
- de l'opération ultérieure de décaillage quant à la fermeté du caillé, pour éviter la formation de "fines",
- de la texture du caillé,
- de l'extrait sec final du fromage fabriqué,
- de l'évolution de l'affinage.

Sachant, de plus, que de très faibles variations du pH à l'emprésurage ont des conséquences sensibles aux stades ultérieurs, il y a donc un intérêt certain à la mise au point d'un nouveau procédé rendant possible d'éliminer les inconvénients susdécrits, inhérents à l'opération de préparation du lait en vue de la fabrication de fromages à pâte pressée culte.

Ce but n'a pas été atteint par les techniques décrites d'une part, dans le US-A-2 982 654 et, d'autre part, dans la publication "Journal of Dairy Science", vol. 64, no.3, mars 1981, pages 523-525, techniques qui proposent de remplacer, dans la fabrication de fromages très différents de ceux à pâte pressée cuite,

3

les ferments acidifiants par un agent acidogène.

Or, la Société Demanderesse a mis au point un nouveau procédé de fabrication de fromages à pâte pressée cuite permettant la maîtrise de l'étape de préparation du lait, ce qui entraîne une constance accrue lors des différentes phases de la fabrication et une régularité supérieure des caractéristiques des fromages obtenus.

Ce nouveau procédé de fabrication de fromages à pâte pressée cuite est caractérisé par le fait que:

- l'on mesure le pH initial et la température initiale du lait à partir duquel doit être préparé le fromage à pâte pressée cuite,
- l'on sélectionne un agent acidogène dans le groupe comprenant les gluconolactones et les glucoheptonolactones,
- l'on détermine la période de temps à l'intérieur de laquelle le pH du lait sera amené de son pH initial à un pH d'emprésurage, le pH d'emprésurage étant compris entre 6,40 et 6,70, ce pH étant le pH d'emprésurage du type de fromage à pâte pressée cuite devant être fabriqué, ainsi que la quantité d'agent acidogène nécessaire pour amener le pH initial du lait jusqu'au susdit pH d'emprésurage, lesdites période de temps et quantité d'agent acidogène étant déterminées à partir de la connaissance de la cinétique de transformation de l'agent acidogène à ladite température du lait,
- l'on amène le pH du lait au pH d'emprésurage par addition de ladite quantité d'agent acidogène,
- l'on emprésure le lait ainsi acidifié par addition d'enzymes coagulantes,
- l'on coagule le lait emprésuré et l'on procède aux étapes de
    - découpage-décaillage,
    - cuisson,
    - brassage,
    - moulage,
    - pressage,
    - démoulage et
    - affinage.

La Demanderesse a en effet constaté que, de façon surprenante, l'utilisation d'un agent acidogène permettait d'abaisser le pH du lait avant emprésurage de façon limitée et fiable, et ceci de manière simple et dans un temps prédéterminé, sans affecter de façon défavorable les étapes ultérieures de la fabrication des fromages à pâte pressée cuite et les caractères organoleptiques des produits obtenus.

Le lait, matière première servant à la fabrication des fromages à pâte pressée cuite selon la présente invention, peut être n'importe quel lait ou mélange de laits de toute origine, en particulier ceux mis en oeuvre habituellement dans la fabrication des fromages à pâte pressée cuite selon l'art antérieur.

Par agent acidogène, on entend ici toute substance neutre du point de vue du pH et capable, après solubilisation en milieu aqueux, de se transformer progressivement en acide.

Parmi les substances de ce type, figurent certains anhydrides d'acides, les lactides et notamment ceux à bas point de fusion de l'acide lactique, les lactones telles que les gluconolactones et les glucoheptonolactones, et similaires et/ou leurs mélanges.

Ces définitions étant données, l'invention a pour objet un procédé de fabrication de fromages à pâte pressée cuite comprenant essentiellement les étapes successives de préparation du lait, emprésurage, coagulation, découpage-décaillage, cuisson, brassage, moulage, pressage, démoulage et affinage, caractérisé par le fait qu'au cours de la phase de préparation du lait, celui-ci est acidifié de manière contrôlée jusqu'à une valeur de pH comprise entre 6,70 et 6,40 à l'aide d'un agent acidogène.

Il est bien connu que la cinétique de transformation d'un agent acidogène en acide est strictement dépendante de la température du milieu aqueux dans lequel il est solubilisé. En conséquence, à partir des trois paramètres de base du lait utilisé dans l'industrie fromagère qui sont :

- le pH initial du lait,
- le pH requis pour l'emprésurage,
- la température du lait,

le technicien peut déterminer avec précision la dose d'agent acidogène à incorporer et le temps requis pour atteindre le pH d'emprésurage voulu, connaissant avec certitude la cinétique d'hydrolyse de l'agent acidogène.

Cette amélioration apportée par l'addition d'agent acidogène au moment de la maturation conduit donc à une parfaite et totale maîtrise de la phase de préparation du lait.

Cet apport d'agent acidogène peut être effectué indifféremment sous la forme de poudre ou sous la forme de solution.

Dans le cas où l'agent acidogène est ajouté sous la forme pulvérulente, sa dispersion dans le lait et sa solubilisation sont assurées par tout moyen d'agitation approprié.

4

Dans le cas où il est préféré d'apporter cet agent acidogène sous la forme d'une solution, celle-ci est avantageusement préparée au moment de l'emploi afin de limiter autant que faire se peut l'hydrolyse de l'agent acidogène. En effet si, de par cette hydrolyse, la solution d'agent acidogène présentait une trop grande acidité, l'avantage d'une acidification progressive disparaîtrait alors que les inconvénients liés à l'emploi direct d'acides dans la production industrielle de fromages à pâte pressée cuite se manifesteraient de nouveau.

Dans la pratique, et compte tenu des particularités propres à chaque ligne de fabrication de fromages à pâte pressée cuite, le technicien, connaissant la cinétique d'hydrolyse de l'agent acidogène employé, déterminera le meilleur moment pour l'introduire.

A titre indicatif, l'agent acidogène pourra être introduit :
- dans le lait cru, ou
- dans le lait après le traitement thermique éventuel.

Il est bien entendu que d'autres variantes pourraient être envisagées.

Dans tous les cas, il conviendra, pour déterminer le moment auquel l'agent acidogène doit être introduit, de tenir compte de sa cinétique d'hydrolyse à la température du lait au moment de l'introduction et jusqu'à l'emprésurage.

Dans certain cas, on préférera choisir une dose d'agent acidogène telle que, après hydrolyse complète de cet agent, le lait soit au pH requis pour l'emprésurage. Dans d'autres cas, cette dose pourra être supérieure, de sorte que l'hydrolyse de l'agent acidogène au pH déterminé pour l'emprésurage soit incomplète, favorisant ainsi l'acidification ultérieure du lait emprésuré.

Ainsi, une dose appropriée d'agent acidogène peut permettre une maîtrise de l'acidification au cours des étapes de fabrication qui suivent l'emprésurage, notamment en assurant une baisse de pH reproductible de l'emprésurage à la coagulation et ensuite au moins jusqu'au décaillage.

Cette acidification contrôlée à l'emprésurage et au cours des étapes qui suivent l'emprésurage est avantageusement pratiqueé quand les ferments employés pour l'acidification ultérieure du caillé ont un temps de latence important, notamment dans le cas d'emploi de ferments pour l'ensemencement direct du lait, utilisés sous forme congelée ou lyophilisée.

De la même façon, la société demanderesse a observé que l'acidification contrôlée à l'emprésurage et au cours des étapes qui suivent l'emprésurage, permet, dans certaines conditions, une réduction des temps de fabrication.

Outre les avantages techniques liés à la maîtrise du pH durant la maturation, la Société Demanderesse a aussi mis en évidence le fait que le remplacement des ferments lactiques mésophiles par un agent acidogène lors de la phase de maturation était sans incidence significative sur les caractéristiques de texture et de goût des fromages à pâte pressée cuite affinés.

Le procédé selon l'invention n'implique pas pour autant l'élimination des ferments lactiques thermophiles ni éventuellement l'élimination des ferments lactiques mésophiles ou de tout autre ferment. Il est en effet possible d'introduire des ferments lactiques ou tout autre microorganisme au cours de la mise en oeuvre du procédé selon l'invention, en une quantité et à un moment qui seront fonction des objectifs technologiques ou qualitatifs recherchés.

Les agents acidogènes utilisés de préférence dans le cadre de l'invention sont les gluconolactones et les glucoheptonolactones, de préférence encore les gluconolactones et notamment la gluconodeltalactone (GDL).

Outre les avantages précités, l'excellente solubilité dans les milieux aqueux de la GDL et sa cinétique d'hydrolyse aux températures traditionnellement rencontrées notamment avant l'emprésurage, la rendent parfaitement adaptée aux exigences propres à la fabrication des fromages à pâte pressée cuite, notamment lors de l'étape de préparation du lait avant l'emprésurage.

Avantageusement, la quantité d'agent acidogène mise en oeuvre dans le cadre de l'invention est de 1 à 500 g/hl de lait. De préférence, elle est comprise entre 2 et 200 g/hl de lait, selon l'agent acidogène utilisé.

Ainsi, dans le cas particulier où l'agent acidogène est la GDL, la quantité mise en oeuvre est avantageusement de 1 à 100 g/hl de lait. De préférence, elle est comprise entre 2 et 500 g/hl de lait.

L'invention sera mieux comprise à l'aide des exemples qui suivent et qui comportent la description de modes de réalisation avantageux. Tous ces exemples ont été réalisés par l'I.T.I.L. dans les locaux de l'Ecole Nationale d'Industrie Laitière de MAMIROLLE - BESANCON (France).

Exemples de fabrication de fromages à pâte pressée cuite de type comté.

EXEMPLE 1 - Témoin

EP 0 229 565 B1

Il se rapporte à la fabrication d'un fromage de type comté, à base de lait entier cru. Il est réalisé à partir d'un lait d'hiver dont le pH à l'introduction dans la cuve de maturation est de 6,70 ± 0,02. Il est réceptionné la veille au matin et laissé à 6°C dans une cuve de "report" (temps tampon) jusqu'au lendemain matin où un volume de 400 l de ce lait est introduit dans la cuve en cuivre traditionnellement utilisée pour la fabrication de ce type de fromages à pâté pressée cuite. Il est réchauffé progressivement par injection de vapeur d'eau dans la double enveloppe.

Lorsque la température atteint 15°C, on démarre la maturation par apport de ferments lactiques :

- ferments lactiques mésophiles mis en oeuvre selon les conditions suivantes : une préparation concentrée et congelée, commercialisée par les Laboratoires Miles -Division Marshall (rue des Longs Réages - 28230 EPERNON -France), est cultivée sur le milieu nutritif Marstar, commercialisé par ces mêmes Laboratoires en appliquant strictement les conditions de préparation préconisées par lesdits Laboratoires. 0,1 % de cette culture (exprimé en volume par rapport au lait) soit 0,4 l est ensuite mélangé aux 400 l de lait.

- ferments lactiques de type streptocoques thermophiles préparés au préalable comme suit : une préparation commerciale, concentrée, congelée provenant des Laboratoires Miles - Division Marshall est cultivée sur le milieu nutritif commercialisé sous la dénomination "412A" par les Laboratoires Miles en appliquant strictement les conditions de préparation préconisées par ces Laboratoires. 0,1/% de cette culture est mélangé au lait.

Lorsque la température du lait atteint 31,5°C, soit environ 15 minutes après le début de la maturation, elle est stabilisée à cette valeur par arrêt du chauffage à la vapeur.

45 minutes plus tard, on réalise l'introduction de ferments lactiques thermophiles constitués par un mélange d'une préparation lyophilisée de streptocoques thermophiles et d'une préparation lyophilisée de Lactobacillus helveticus et lactis provenant de la Société LACTO-LABO (B.P. 10 -23 rue du Collège - 86220 DANGE-SAINT-ROMAIN - France), cultivé sur lait écrémé stérilisé à l'autoclave dans des conditions choisies telles, que après incubation, la culture contienne approximativement 50 % des streptocoques et 50 % de Lactobacillus (estimation faite par examen microscopique).

0,05 % de cette culture est mélangé au lait.

15 minutes plus tard, soit 60 minutes après le début de la maturation, le pH doit avoir atteint 6,60 (dans le cas présent, il est de 6,63 ± 0,02). L'emprésurage est alors réalisé par un apport d'enzymes coagulantes sous la forme de préparation commerciale connue sous le nom d'extrait de présure concentrée (dosé à 690 mg de chymosine par litre) tel celui commercialisé par la Société GRANDAY (Zone Industrielle de Beaune Nord - B.P. 3 - 21201 BEAUNE CEDEX, France). Une concentration de 0,17 ml/l de lait est nécessaire.

Il est à noter que la durée totale de maturation est modifiée en cours d'année pour tenir compte des variations saisonnières de pH du lait, ce temps n'étant par exemple que de 30 minutes en été.

Le lait est laissé au repos pour une coagulation correcte. Dans les conditon de cet essai, la coagulation apparaît après 25 minutes, ce temps étant traditionnellement appelé "temps de prise". Un temps de durcissement de 4 minutes est encore observé, après quoi a lieu le découpage manuel à l'aide de l'appareil à fils traditionnellement employé pour cette opération. Des mouvements dans deux directions perpendiculaires permettent de découper le coagulum en morceaux de 50 cm$^3$ environ. Cette opération terminée, le caillé est brassé manuellement avec précaution durant 2 minutes environ avec une sorte de pelle appelée "poche".

Un repos de 2 minutes est encore observé puis le découpage du caillé est repris à l'aide du même appareil à fils que précédemment. Cette phase connue sous le nom de "décaillage" est poursuivie durant 3 minutes environ jusqu'à ce que le caillé ait été découpé en grains de 3 mm environ de diamètre.

Le mélange caillé-sérum est ensuite agité mécaniquement durant un temps d'environ 4 minutes, cette agitation lente évitant aux grains de caillé de se ressouder.

La cuisson est alors réalisée par un chauffage progressif du caillé maintenu sous agitation mécanique, par injection de vapeur dans la double enveloppe, selon la cinétique précise suivante :

- jusqu'à 35°C à raison de 1°C/2 mn
- jusqu'à 47°C à raison de 2°C/3 mn
- jusqu'à 53°C à raison de 1°C/1 mn.

La cuisson est arrêtée à la température précise de 53°C. La durée totale du chauffage est donc de 31 minutes.

Le caillé est maintenu sous agitation pendant encore 30 minutes, jusqu'à ce que les grains de caillé aient atteint la texture désirée, appréciée manuellement. Le pH est alors de 6,50 ± 0,02 et la température est de 51°C.

Le moulage du fromage est alors effectué à l'aide d'un appareil de soutirage sous vide tel que celui de la Société CHALON-MEGARD (01460 LA CLUSE - France), lequel transféré l'ensemble du mélange caillé-sérum dans un moule à comté (diamètre : 63 cm, hauteur : 24 cm) également commercialisé par la Société CHALON-MEGARD. L'extraction du sérum est poursuivie durant 13 minutes par une aspiration à l'aide d'un vide de $4.10^4$ Pa environ (30 cm de mercure).

Le fromage maintenu dans son moule est ensuite sorti de la soutireuse et subit le pressage par injection d'air comprimé dans la poche plastique prévue à cet effet et située en haut du moule. Un premier pressage de 2 heures sous une pression de 0,5 bar est suivi d'un second pressage de 4 heures sous une presion de 1 bar. A la suite de quoi le pressage est arrêté et le fromage est laissé dans son moule jusqu'au lendemain matin.

Le démoulage est alors effectué. On obtient un fromage de 35 kg environ à partir des 400 l de lait mis en oeuvre. Son pH est de 5,27 ± 0,02. Son pourcentage en extrait sec est de 60 %.

Le fromage est ensuite affiné de la façon suivante:
- En cave froide : à 8-10°C durant quelques jours, selon appréciation du technicien
- En cave chaude : à 16-18°C durant 1 à 2 mois, selon appréciation du technicien.

Durant tout le séjour en cave chaude, le fromage est frotté en surface, à raison de deux fois par semaine avec une solution légèrement salée ensemencée en morge (flore superficielle de ce type de fromage) selon la technique traditionnelle.
- Retour en cave froide: à 6-7°C durant au moins 2 mois.

Les principales données relevées sont portées dans le tableau qui suit.

EXEMPLE 2 - selon l'invention

Il se distingue par rapport à la fabrication décrite dans l'exemple 1 par les traits suivants :
- Le pH du lait à l'arrivée à l'usine est de 6,66 ± 0,02.
- Les ferments lactiques mésophiles apportés en début de maturation dans l'exemple 1 sont employés à la même concentration mais introduite juste avant l'emprésurage.
- 40 g de gluconodeltalactone cristallisée commercialisée par la Société ROQUETTE FRERES sont introduits dans les 400 l de lait dans la cuve de stockage, c'est-à-dire la veille au soir, ce qui équivaut à une concentration de 10 g/hl de lait. L'agitateur mécanique présent sur la cuve permet la solubilisation de la GDL.

Les principales données relevées sont portées dans le tableau qui suit.

## TABLEAU

## Préparation de fromages à pâte pressée cuite, type comté

| | Exemple 1 | Exemple 2 |
|---|---|---|
| pH initial du lait (± 0,02) | 6,70 | 6,66 |
| **Maturation** | | |
| GDL (g/hl) | – | 10 |
| ferments lactiques mésophiles (%) | 0,1 | – |
| Streptocoques thermophiles (%) | 0,1 | 0,1 |
| ferments lactiques mixtes thermophiles (%) | 0,05 | 0,05 |
| **Emprésurage** | | |
| pH à l'emprésurage (± 0,02) | 6,63 | 6,59 |
| dose d'enzymes coagulantes (ml/l) | 0,17 | 0,17 |
| ferments lactiques mésophiles (%) | – | 0,1 |
| temps de prise (mn) | 25 | 26 |
| **Chauffage - brassage** | | |
| pH au moulage (± 0,02) | 6,50 | – |
| **Démoulage** | | |
| pH du fromage (± 0,02) | 5,27 | 5,30 |
| extrait sec (%) | 59,8 | 59,8 |

**Revendications**

1. Procédé pour la fabrication de fromages à pâte pressée cuite, caractérisé par le fait que:
   - l'on mesure le pH initial et la température initiale du lait à partir duquel doit être préparé le fromage à pâte pressée cuite,
   - l'on sélectionne un agent acidogène dans le groupe comprenant les gluconolactones et les glucoheptonolactones,
   - l'on détermine la période de temps à l'intérieur de laquelle le pH du lait sera amené de son pH initial à un pH d'emprésurage, le pH d'emprésurage étant compris entre 6,40 et 6,70, ce pH étant le pH d'emprésurage du type de fromage à pâte pressée cuite devant être fabriqué, ainsi que la quantité d'agent acidogène nécessaire pour amener le pH initial du lait jusqu'au susdit pH d'emprésurage, lesdites période de temps et quantité d'agent acidogène étant déterminées à partir de la connaissance de la cinétique de transformation de l'agent acidogène à ladite température du lait,
   - l'on amène le pH du lait au pH d'emprésurage par addition de ladite quantité d'agent acidogène,
   - l'on emprésure le lait ainsi acidifié par addition d'enzymes coagulantes,
   - l'on coagule le lait emprésuré et l'on procède aux étapes de
     - découpage-décaillage,
     - cuisson,
     - brassage,
     - moulage,
     - pressage,
     - démoulage et
     - affinage.

**2.** Procédé selon la revendication 1, caractérisé par le fait qu'il comporte en plus une étape d'addition au lait de ferments lactiques thermophiles, mésophiles ou de tout autre ferment, préalablement à l'emprésurage, lesdits ferments lactiques qui sont ajoutés en vue d'une bonne conduite de l'affinage, ayant un effet acidifiant non pas à l'emprésurage mais lors des phases ultérieures.

**Claims**

**1.** Process for manufacturing cooked pressed cheeses characterized by the fact that:
- the initial pH and the initial temperature of the milk from which the cooked pressed cheese is to be prepared are measured,
- an acidogen is selected from the group comprising gluconolactones and glucoheptonolactones,
- the period of time within which the pH of the milk will be brought from the initial pH to a renneting pH is determined, said renneting pH being comprised between 6.40 and 6.70, said pH being the required renneting pH for the type of cooked pressed cheese being manufactured, and the amount of acidogen required to bring the initial pH of the milk to the said renneting pH is determined, said period of time and said amount of acidogen being determined based on the knowledge of the kinetics of transformation of the acidogen at said temperature of the milk,
- the pH of the milk is brought to the renneting pH by adding of the said amount of acidogen,
- the milk thus acidified is renneted by adding coagulating enzymes,
- the renneted milk is coagulated and it is proceeded to the successive steps of
    - cutting up-cutting with grinding,
    - cooking,
    - grinding,
    - moulding,
    - pressing,
    - taking from the mould and
    - ripening.

**2.** Process according to claim 1, characterized by the fact that it further comprises the step of adding thermophilic, mesophilic lactic ferments or of any other ferment to the milk, prior to renneting, said lactic ferments which are added with a view to good progress of ripening, having an acidifying effect not during renneting but during the subsequent phases.

**Patentansprüche**

**1.** Verfahren zur Herstellung von Hartkäsen,
**dadurch gekennzeichnet,**
daß man:
- den Anfangs-pH-Wert und die Anfangstemperatur der Milch mißt, aus welcher der Hartkäse hergestellt werden soll;
- ein azidogenes Mittel aus der Gluconolactone und Glucoheptonolactone umfassenden Gruppe auswählt;
- die Zeitspanne bestimmt, innerhalb welcher der pH-Wert der Milch von deren Anfangs-pH-Wert auf einen pH-Wert der Einlabung oder Labzusatz-pH gebracht werden soll, wobei der pH-Wert der Einlabung zwischen 6,40 und 6,70 liegt, und wobei dieser pH-Wert den Einlabungs-pH-Wert des herzustellenden Hartkäsetyps darstellt; sowie die Menge des azidogenen Mittels bestimmt, welche notwenig ist, um den Anfangs-pH-Wert der Milch bis zu dem genannten Einlabungs-pH-Wert zu bringen, und wobei die genannte Zeitspanne und die genannte Menge des azidogenen Mittels auf Grund der Kenntnis der Kinetik der Umwandlung des azidogenen Mittels bei der genannten Temperatur der Milch bestimmt werden,
- den pH-Wert der Milch durch Zugabe der genannten Menge des azidogenen Mittels auf den Einlabungs-pH-Wert bringt,
- die angesäuerte Milch durch Zugabe von koagulierenden Enzymen einlabt,
- die eingelabte Milch koaguliert und die Stufen des:
    - Zerschneidens des Käsebruchs,
    - Erwärmens,
    - Rührens,
    - Formens,

- Pressens,
- Entformens und
- der Nachbehandlung oder Affinieren
  durchführt.

2. Verfahren nach Anspruch 1,
   **dadurch gekennzeichnet,**
   daß es außerdem, vor der Einlabung, eine Stufe der Zugabe von thermophilen bzw. mesophilen Milchfermenten oder von irgendeinem anderen Ferment zu der Milch umfaßt, wobei die genannten Milchfermente, die zu dem Zweck eines guten Verhaltens während der Nachbehandlung zugesetzt werden, eine ansäuernde Wirkung nicht während der Einlabung, sondern während der späteren Phasen haben.